# EUROPEAN PATENT SPECIFICATION

(11) **EP 1 727 251 B1**
(45) Date of publication and mention of the grant of the patent: **20.12.2017**
(21) Application number: 06076676.3
(22) Date of filing: 27.08.2004
(51) Int. Cl.: H02G 1/04

(54) **A METHOD FOR ANCHORING A VEHICLE**
VERFAHREN ZUM VERANKERN EINES FAHRZEUGS
Procédé D'ANCRAGE D'UN VÉHICULE

(30) Priority: 27.08.2004 US 498707
(43) Date of publication of application: 29.11.2006
(62) Divisional of application: 04786590.2
(73) Proprietor: Quanta Services, Houston, TX 77056-6175 (US)
(72) Inventor: Devine, Clifford W., Oliver, British Colubia VOH 1TO (CA); O'Connell, Daniel N., Oliver, British Columbia VOH 1TO (CA)
(74) Representative: Powell, Stephen David

(56) References cited:
- JP-A- 2002 234 689
- US-A- 3 703 980

## Description

### FIELD OF THE INVENTION

The present invention relates generally to high voltage power transfer systems. More particularly, the present invention relates to replacing conductors in a high voltage power system.

### BACKGROUND OF THE INVENTION

Document JP 2002234689 A discloses a high-lift working vehicle. Document US 3703980 A discloses a tension brake assembly for stringing conductors.

Users of large amounts of electrical power such as cities, manufacturing facilities, and other high-power users are often located quite a distance away from sources of electrical power such as hydroelectric dams and power plants. In order to deliver large amounts of power from the source of generation to the power consumers, large, high-capacity, high-voltage power lines are used.

Typically, alternating current (AC power) is generated in a three-phase configuration. For the purposes of this document, the three phases will be referred to as A, B and C phase. A phase, B phase and C phase are all transported over separate conductors. In some instances direct current (DC Power) is used in which case two conductors are used and are referred to as A and C phase. Typically, the conductors are comprised of long wires supported on large support structures such as towers or power poles. The separate conductors are typically attached to the same support structures.

From time to time, the power lines transporting the power may require maintenance. For example, a section of the conductor may need to be replaced, an insulator insulating the power line from the support structure may need to be replaced, or, the support structure itself may need repair or replacement. In some cases, conductors may be functioning properly, but need to be replaced by higher-capacity conductors in order to transport more power.

Typical maintenance on power lines requires that the power be shut off before the line can be worked on. High induction currents may be induced into a conductor in the proximity of other high voltage conductors thus creating a hazard in order to work on a particular conductor.

Shutting off the power creates a disruption of power delivery to customers.
A power user may be forced to do without power during the time the power line is maintained which is undesirable for a variety of reasons. To provide consumers with power while a particular line is being worked on, the load may be shifted to other power lines to deliver the power to the end user. Unfortunately, shifting power to other transmission lines is not always possible because redundant systems may not exist, or transmission lines may already be operating at or near capacity level and not able to deliver the required power.

Accordingly, it is desirable to provide a method and any accompanying apparatus necessary to allow high voltage power transmission lines to be worked on, replaced or maintained without requiring power to stop being delivered or diverted over to other remote transmission lines.

### SUMMARY OF THE INVENTION

The foregoing needs are met, to a great extent, by the present invention, wherein in one aspect a method is provided according to claim 1 that, in some embodiments, permits high voltage power transmission lines to be worked on, replaced, or maintained while the line being worked on is energized.

In accordance with one embodiment, an equal potential zone is provided. The equal potential zone includes: an electrically conductive mat configured to be electrically bonded to the earth; a first fence surrounding at least part of a perimeter associated with the mat; and a second fence surrounding at least part of the perimeter of the equal potential and spaced apart from the first fence.

In accordance with one embodiment, an insulated section for an equal potential zone is provided. The insulated section includes: decking; and an insulator located at least one of above and beneath the decking and configured to electrically insulate the decking from the ground.

In accordance with one embodiment, an equal potential zone is provided. The equal potential zone includes: an electrically conductive surface configured to be grounded to the earth; means for entering and exiting the equal potential zone; and a first and second means for blocking surrounding at least part of the electrically conductive surface but not the entering and exit means.

In accordance with one embodiment of the present invention, a method of making an equal potential zone is provided. The method includes: bonding an electrically conductive mat to earth; insulating an exit/enter section for the equal potential zone; surrounding at least part of the mat with a first fence electrically bonded to the mat; and surrounding at least part of the mat with a second fence spaced apart from the first fence.

In accordance with the present invention, a method of anchoring a vehicle on an equal potential zone is provided. The method includes: placing a first vehicle on the equal potential zone; electrically bonding the first vehicle to the equal potential zone; locating an anchor off of the equal potential zone and spaced from the equal potential zone; mechanically connecting the anchor to the first vehicle; and electrically insulating the anchor from the first vehicle.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

### BRIEF DESCRIPTION OF THE DRAWINGS

FIG. 1 is a top view of a partially constructed equal potential zone made of three conductive mesh mats laying side by side together.
FIG. 2 is a top view of a partially constructed equal potential zone showing the mats of FIG. 1 electrically bonded together.
FIG. 3 is a top view of an alternate embodiment of a partially-constructed equal potential zone showing vinyl mat sections laid out together.
FIG. 4 is a top view of a partially-constructed equal potential zone showing the mats of FIG. 3 bonded together.
FIG. 5 is a top view of a partially-constructed equal potential zone showing the bonded together mats grounded by bonding the mats to ground rods.
FIG. 6 is a side view of an insulated access point for an equal potential zone using insulators.
FIG. 7 is a side view of an alternate embodiment of an insulated access point for an equal potential zone using a rubber mat.
FIG. 8 is a top view of an equal potential zone.
FIG. 9 is a side view of a puller truck parked on top of an equal potential zone where the truck is bonded to the equal potential zone and the puller line is also bonded to the equal potential zone.
FIG. 10 is a side view of a payout truck parked on an equal potential zone, mechanically attached to, but electrically isolated from, a bulldozer.
FIG. 11 shows a puller truck electrically bonded to an equal potential zone and the pulling truck line connected to the new conductor and running through a traveler on the support tower and the line is also bonded to the equal potential zone.
FIG. 12 shows a payout truck bonded to an equal potential zone with a new conductor strung to a support tower where the conductor is bonded to the equal potential zone.
FIG. 13 is a schematic diagram of a group of support structures to be strung with a conductor and location of stringing equipment and equal potential zones.
FIG. 14 is the layout of FIG. 13 where the support structures are strung with a pulling rope.
FIG. 15 is the layout of FIG. 14 where the rope is attached to a hard line and isolated from each other by tested insulating rope.
FIG. 16 is the layout of FIG. 15 where the rope is pulling the hard line through the support structures.
FIG. 17 is the layout of FIG. 16 where an insulated rope and hard line is pulled as far as the temporary dead end.
FIG. 18 is the layout of FIG. 17 where a hard line is attached to the temporary dead end.
FIG. 19 is the layout of FIG. 18 where the insulated rope is disconnected from the hard line.
FIG. 20 is the layout of FIG. 19 showing a payout truck and a bull wheel tensioner truck parked on and bonded to an equal potential zone.
FIG. 21 is the layout of FIG. 20 where the new conductor is connected to the hard line via an insulating rope.
FIG. 22 is the layout of FIG. 21 where the insulator is removed to free the hard line from the dead end.
FIG. 23 is the layout of FIG. 22 showing the new conductor being pulled (strung) through the system by the hard line.
FIG. 24 is the layout of FIG. 23 where the new conductor is strung until the insulating rope reaches the temporary cat mounted support structure.
FIG. 25 is the layout of FIG. 24 where an insulating rope is attached at one end to the conductor and at the other end to a sagging vehicle.
FIG. 26 is the layout of FIG. 25 where the sagging vehicle takes up slack in the conductor and the hard line puller vehicle lets off tension allowing the hard line to become slack.
FIG. 27 is the layout of FIG. 26 where the hard line and insulating rope is disconnected from the newly strung conductor.
FIG. 28 is the layout of FIG. 27 where a compression dead end is attached to the conductor.
FIG. 29 is the layout of FIG. 28 where the sagging vehicle takes up slack in the conductor and the compression dead end is attached to the insulators on the support structure.
FIG. 30 is the layout of FIG. 29 where the sagging vehicle has been disconnected from the conductor thus transferring conductor tension to the dead end structure.
FIG. 31 is the layout of FIG. 30 where the sagging vehicle is connected by an insulating rope to one end of the new conductor and has taken the tension of the new conductor.
FIG. 32 is the layout of FIG. 31 where the conductor is attached to an insulator on a temporary dead end.
FIG. 33 is the layout of FIG. 32 where the sagging vehicle is disconnected from the conductor.
FIG. 34 is the layout of FIG. 33 where the new conductor is removed from the travelers on the support structures and connected to the insulators.
FIG. 35 is the layout of FIG. 34 where a sagging vehicle is attached by an insulating rope to the conductor coming from the payout vehicle and applies tension to the new conductor.
FIG. 36 is the layout of FIG. 35 where a jumper is installed on the new conductor.
FIG. 37 is the layout of FIG. 36 where the new conductor is cut between ends of the jumper.
FIG. 38 is the layout of FIG. 37 where the jumper is removed insulating the payout from newly strung conductor.
FIG. 39 is the layout of FIG. 38 where the conductor tail is coiled and secured to the temporary dead end.
FIG. 40 is a schematic diagram of a side view of the insulating rope connecting two lengths of conductor prior to being spliced together.
FIG. 41 is a side view of a section of a power transfer system showing a jumper installed around the insulating rope.
FIG. 42 is a side view of a section of a power transfer system illustrating a splicing truck parked under insulating rope.
FIG. 43 is an end view of a traveler in accordance with one embodiment of the invention.
FIG. 44 is a side view of a traveler in accordance with an embodiment of the invention.
FIG. 45 is an end view of a support structure with travelers configured for helicopter stringing according to another embodiment of the invention.
FIG. 46 is a perspective view of a portable, temporary support structure (a. k. a. a pole cat).

### DETAILED DESCRIPTION

The invention will now be described with reference to the drawing figures, in which like reference numerals refer to like parts throughout. An embodiment in accordance with the present invention provides a system, method, and apparatus for replacing high voltage power transmission conductors without affecting power users or power suppliers by necessitating the power transmitted by the conductors to be shut off or diverted to other remote power transmissions systems.

Power delivery systems such as high voltage power lines often transport Alternating Current ("AC") power in a three phase configuration. Direct Current ("DC") power systems transfer power over two phases. Each phase is transferred over a separate conductor. For the purposes of this document each of the letters A, B, and C will represent one of three phases of a three phase AC system. The methods and apparatus described herein can be adapted for use in a DC system by applying the methods and apparatus described herein for the A and C phase for the two phases in the DC system. The application of the methods and apparatus may be applied to systems of generally any common voltage level. For example, systems of 44 kV or higher are contemplated within embodiments of the invention.

In accordance with the invention, a method for replacing conductors in a high voltage power delivery system includes one of two embodiments or a combination of the two embodiments. In one embodiment of the invention, a new conductor referred to herein as "D phase" conductor is strung along an existing system. The new D phase conductor may be supported by new support structure that may be permanent or temporary. Once the new D phase conductor is in place, the power load is transferred from one existing conductor to the new D phase conductor. The old conductor is then removed. Depending on a particular application, the re-conductoring of that phase may be complete at this point, or the removed conductor may be replaced and power load is then transferred from the D phase conductor back to the new conductor. This process may be repeated for the conductors of the other phases. If no longer needed, the D phase conductor may then be removed.

In a second embodiment of the invention, a conductor is moved to a temporary position, a new conductor is then strung in or near the old conductor's original position and the power load is transferred from the old conductor to the new conductor. The old conductors (in their temporary positions) are then removed.

Combinations of these two methods may be used in accordance with some embodiments of the invention. For example, a multiphase system will have a conductor (or in some cases more than one conductor strung together if the phase load is too great for just one conductor) for each phase. When replacing multiple conductors in a multiphase system, depending on the circumstances of a particular system, each phase's conductor may be replaced using the same or different methods according to the invention. For example, an A phase conductor may have its power transferred to another conductor (currently not carrying a load, this conductor may be a newly strung D phase conductor or an existing system conductor that has previously had its power load already transferred to another conductor) while the old A phase conductor is taken down and replaced. Once a new A phase conductor is installed, then the load is transferred back to the newly replaced A phase conductor. In the same system, the existing C phase conductor may simply be moved to a new location, while a new replacement C phase conductor is strung into the system. Once the new C phase conductor is strung, the power load from the old C phase conductor is transferred to the new C phase conductor.

In another embodiment of the invention, a new D phase conductor may be strung in the system, the power load from one of the other phases, for example, C phase power load may be transferred to the D phase conductor. The B phase power load may then be transferred to the old C phase conductor. The A phase load can then be transferred to the old B phase conductor. The old A phase conductor may then be removed. These examples of combining techniques for replacing conductors in a system is meant to be exemplary not exhaustive of combinations of techniques used in accordance with the invention.

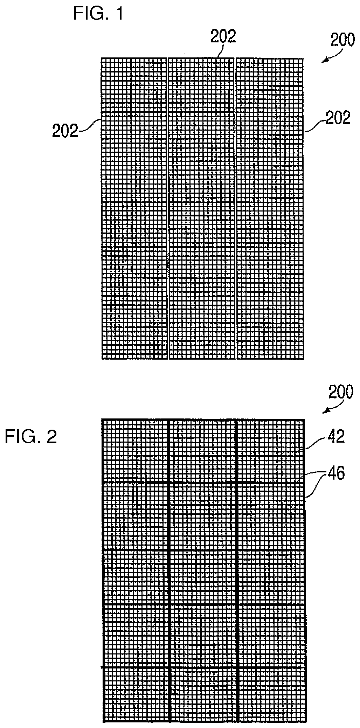

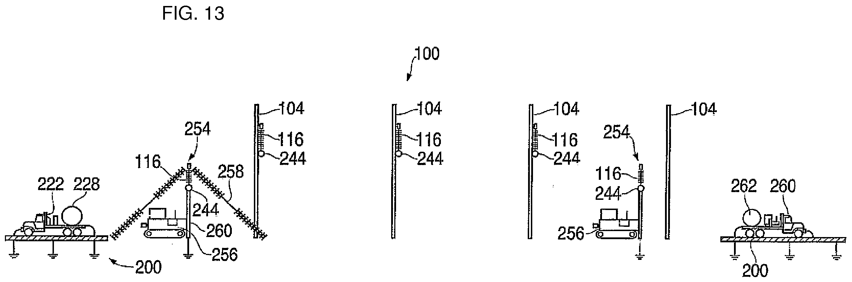

Important aspects of some embodiments of the invention include stringing new conductors on an energized power system 100. A part of the stringing operation includes use of equal potential zones 200. The construction, purpose, and bonding of equipment to equal potential zones will now be described with reference to FIGS. 1-12. After which a stringing procedure in accordance with the invention will be described with reference to FIGS. 13-39.

An equal potential zone 200 as shown in FIGS. 1-12 will now be described. In order to bring workers to the same electrical potential as the lines that they are working on, an equal potential zone 200 is created. When workers and equipment are at the same electrical potential as the conductor, the conductor can be worked without the need for keeping the workers insulated from the conductor. Using an equal potential zone 200 is one way of keeping workers and conductors at the same potential.

In accordance with some embodiments of the invention, equal potential zones 200 include a large mat(s) 202 located on the ground. Workers and the equipment they will be using are located on the equal potential zone 200. All equipment and conductors currently being worked on are electrically bonded to the equal potential zone 200, which in turn, is connected to ground. In the event that a conductor being worked on becomes energized, or changes in potential, everything on the equal potential zone, including personnel, raises or lowers in voltage equal to the conductor so that there is no differences in potential between them.

Eliminating differences in potential between workers, equipment and conductors protects workers from currents that may flow between differences in potential. Energized conductors create an electromagnetic field around them, and stringing a conductor in close proximity to that electromagnetic field induces a voltage in the conductor being strung. Thus, even if a conductor is not connected to a power source, it may have a significant potential. The equal potential zone 200 also protects the workers from induced voltage occurring on the conductor when stringing a conductor in close proximity to energized conductors. However, when all stringing equipment and conductors being worked on are bonded to the equal potential zone 200 and to ground, the potential is the same between workers the equipment and the conductor being worked on.

The first step of preparing an equal potential zone 200 is to prepare the equal potential zone site. The site is prepared by leveling a large area, large enough for all of the equipment necessary to be parked on the equal potential zone 200. Next, conductive mats 202 are laid down on the leveled area. The mats 202 should be large enough to provide working room around the stringing equipment.

FIG. 1 shows an example of mats 202 being laid down as a step in forming an equal potential zone 200. The mats 202 are preferably made of metal mesh fencing where the mesh is solid, not loose such as chain link. Alternatively, the mats 202 can be vinyl mats with copper braiding sewn into them, thus providing a electrical connection around and through each mat 202. If prefabricated fencing is used, the fencing pieces are electrically bonded together using a #2 ASCR conductor or similar conductor. Several mats 202 of metal fencing electrically bonded together create a zone of equal electrical potential as shown in FIG. 2.

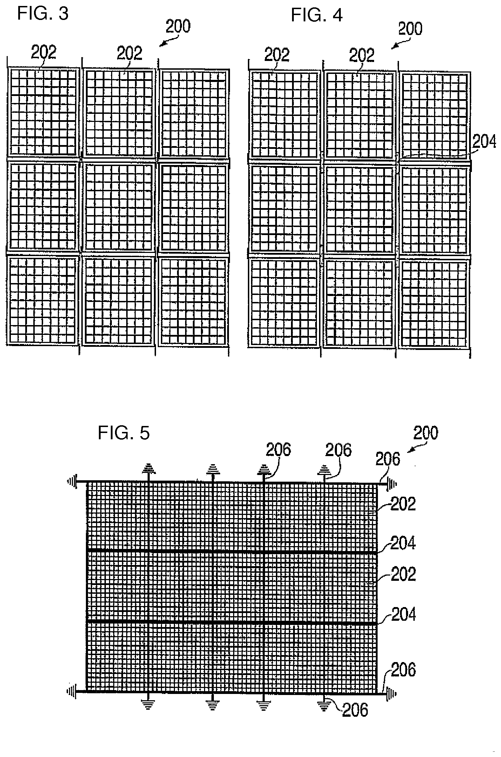

FIG. 3 shows an alternate embodiment in accordance with the present invention where an equal potential zone 200 is made of several vinyl mats 202 laid out and electrically bonded together.

FIG. 4 shows an alternate way of making an equal potential zone 200 where the smaller vinyl mats 202 were laid out together and bonded by conductor 204 creating a partially-constructed equal potential zone 200.

Another step in creating an equal potential zone 200 is shown in FIG. 5.
Ground rods 206 are placed around the perimeter and at other areas as needed of the equal potential zone 200. The ground rods 206 are bonded electrically to the mats 202 and/or the bonding conductor 204. The ground rods 204 are metal conductive rods driven into the ground and thereby grounding the equal potential zone 200.

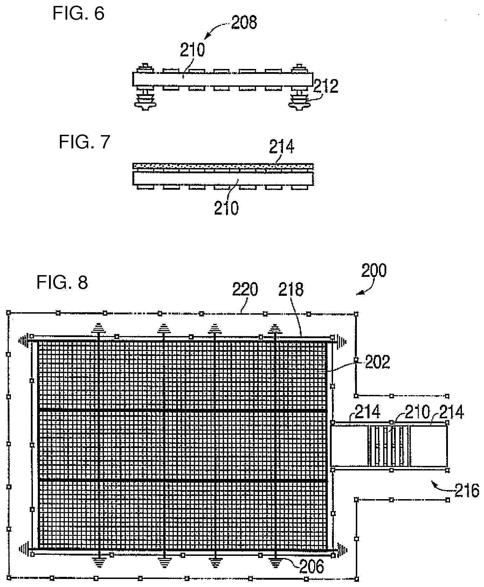

To provide a transition for workers entering and exiting the equal potential zone 200, an insulated section 208 (see FIGS. 6 and 7), is installed. The insulated section 208 is used to avoid exposing workers to step potential. Because the earth is a poor conductor, the potential of the earth located a foot or so from the equal potential zone 200 may have a significantly different potential than the equal potential zone 200. If a worker were to have one foot on the equal potential zone, and one foot on the ground, each foot could be at a different potential. To avoid exposing workers to the difference in potential between the equal potential zone 200 and the earth a short distance way from the equal potential zone 200, workers will first step onto the insulated section 208 and then from there, step onto the equal potential zone 200.

In one embodiment of the invention, the insulated sections 208 include multiple prefabricated insulating sections. For example, as shown in FIG. 6, the insulated section 208 can include a wood pallet or bridge 210 mounted on top of pin insulators 212 arranged on the corners or in some other suitable arrangement where the pin insulators 212 mechanically support the wood pallet or bridge 210 and provide electrical insulation for the pallet or bridge 210 from the ground.

In other embodiments of the invention, the insulated sections 208 may include a wood pallet or bridge 210 with an insulated rubber mat 214 laying on top of the wood pallet or bridge 210 (as shown in FIG. 7). Several insulated sections 208 may be configured into a walkway 216 (see FIG. 8) having a wood pallet or bridge 210 with a rubber mat 214 laying on top of the wood pallet or bridge 210, then a wood pallet or bridge 210 on top of pin insulators 212 then another wood pallet or bridge 210 with an insulated rubber mat 214 laying on top of the wood pallet or bridge 210.

All equipment should then be placed on and bonded to the equal potential zone 200. As shown in FIG. 8, barrier fences 218,220 are erected around the perimeter of the equal potential zone 200 to keep personnel on the equal potential zone 200. The barrier fencing 218,220 should also be placed next to the walkway 216 (as shown in FIG. 8) but open at one end to allow personnel onto the insulated section 208. The insulated sections 208 may include several pallets or bridges 210 (as shown in FIG. 8). A second barrier fence 220 is installed 6 to 10 feet outside the equal potential zone 200 to keep personnel from passing tools and equipment back and forth from the equal potential mat 202 and the area outside the mat. The second barrier fence 220 should also be installed around the insulated walkway 216.

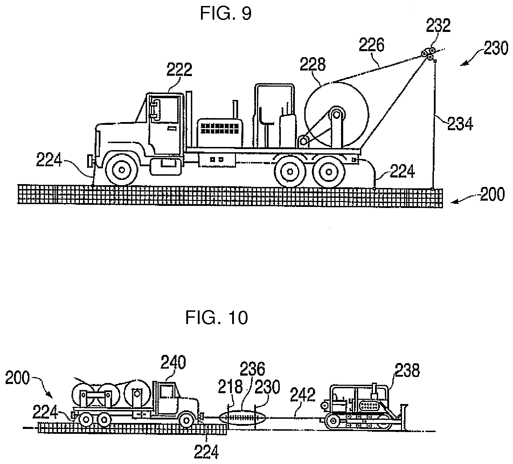

As mentioned above, stringing equipment should be located on and bonded to the equal potential zone 200. The following description describes examples of locating and bonding equipment to the equal potential zone 200 with reference to FIGS. 9-12. As shown in FIG. 9, stringing equipment such as a puller 222 is located on the equal potential mat 202 and bonded to the mat 202 by a conductive jumper 224. The conductive jumper 224 electrically connects equipment such as the puller 222 to the equal potential mat 202. It may be desired to bond the equipment at more than one location (as shown in FIG. 9) where the puller 222 is bonded at both the front and rear. The puller 222 has a pulling rope 226 wrapped on a reel 228, which is also bonded to the equal potential zone 200.

To electrically bond the pulling rope 226 to the equal potential zone 200, a running ground 230 is used. The running ground 230 includes a rolling ground 232 and a conductive jumper 234. The rolling ground 232 is configured to permit the pulling line 226 to move through the rolling ground 232 while maintaining an electrical connection between the pulling line 226 and the equal potential zone 200. The pulling line 226 is electrically bonded to the equal potential zone 200 via a conductive jumper 234 connecting the rolling ground 232 to the equal potential zone 200. Thus, the running ground 230 permits the pulling line 226 to move off the reel 228 as it is being pulled and still maintain an electrical bond with the equal potential zone 200.

Due to the high tensions sometimes associated with stringing conductors 102, some times anchors are used to secure stringing equipment in place. If an anchor located on the equal potential zone 200 is used to secure the stringing equipment in place on the equal potential zone 200, the anchor is bonded to the equal potential zone 200 as well. As shown in FIG. 10, a bulldozer 238 or some other vehicle may be used as an anchor for the stringing equipment. If the anchor is located off the equal potential zone 200 (as shown in FIG. 10) then the cable connecting stringing equipment to the anchor vehicle 238 is electrically insulated.

One way to insulate the stringing equipment from the anchor vehicle 238 is by using a polymer insulator 236. The polymer insulator 236 is installed at the edge of the equal potential zone 200 (as shown in FIG. 10). A piece of stringing equipment, such as a payout truck 240, or other stringing vehicle is located on the equal potential zone 200 and electrically bonded to the equal potential zone 200 via conductive jumpers 224. An anchor cable 242 mechanically connects the stringing equipment such as a payout truck 240 to the anchor vehicle 238, which is, in FIG. 10, a bulldozer. Thus, the stringing equipment 240 and the anchor vehicle 238 are mechanically connected but not electrically connected. The anchor cable 242 has, at least in part, a polymer insulator 236 section. In other embodiments of the invention, the anchor cable 242 is entirely made up using polymer insulators. The anchor cable 242 extends through the barrier fence 218 and the secondary or outer barrier fence 220.

Sometimes it may be desirable to transfer objects on and off the equal potential zone 200. For example, extra reels containing conductor, hard line, or pull rope may need to be moved on and off the equal potential zone. When loading anything on and off the equal potential zone, an insulator must insulate the equipment loading the objects on and off the equal potential zone. If a crane is used, the crane can be located off of the equal potential zone, but the cable portion of the crane that lifts the object may have an insulation rope or other insulator attached to it so that the crane and the object are electrically insulated from each other. Optionally the crane may lift the object via an insulation rope.

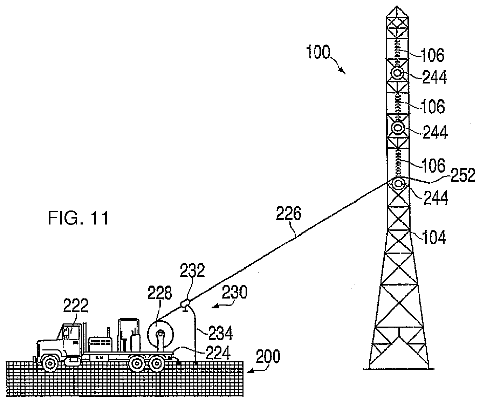

Once all of the equipment is in place and bonded to the equal potential zone 200, or electrically insulated as described with respect to the anchor vehicle 238, the stringing can proceed. Installation of the pulling rope 226 can be done in many ways. As shown in FIG. 11, the pulling rope 226 can be pulled off the puller 222 and passed through each support structure 104 using travelers 244. If there is a concern about the pulling rope 226 contacting energized conductors or energized apparatus, a length of tested insulated rope 252 can be attached to the front end of the pulling rope 226. This initial tested insulated rope 252 is what isolates workers and stringing equipment as the pulling rope 226 is strung through the system 100. It is preferable to test the pulling rope 226 and the insulated rope 252 to determine its di- electric value to ensure the ropes 226,252 insulating qualities. Preferably, the pulling rope 226 and insulated rope 252 are tested using a method and apparatus for testing insulators described in U. S. Patent No. 4,266, 184. Care should be taken to ensure the pulling rope 226 and the insulated rope 252 does not get dirty, wet, or subjected to high humidity as these factors can effect the di-electric value of the rope 226,252.

Crosswinds can be a concern when installing the pulling rope 226. Because the pulling rope 226 is often a different weight than conductors 102, the pulling rope 226 and the conductors 102 may move differently when strung in the system 100. Thus, the possibility exists that the pulling rope 226 may contact a conductor 102. Preferably, stringing operations should be limited during high wind conditions. Preferably the pulling rope 226 is kept at a higher tension sag than the conductors 102, so that if a blowout occurs (rope or line deflection due to wind), it will stay above the conductors 102.

According to some embodiments of the invention and as shown in FIG. 11, a puller 222 is bonded by a conductive jumper 224 to an equal potential zone 200. The pulling rope 226 is bonded to the equal potential zone 200 by a running ground 230 which includes a conductive jumper 234 and a rolling ground 232. The pulling rope 226 is strung through the path to which a new conductor 102 is to be pulled. Travelers 244 are installed at the end of insulators 106 mounted to a support structure 104. The travelers 244 are pulley like devices which are discussed more in detail below. The travelers 244 permit both the pulling rope 226 and the conductor 102 to be strung and moved along the system 100.

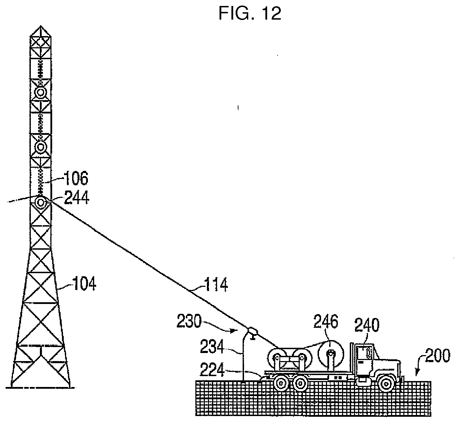

In some embodiments of the invention, once a pulling rope 226 has been pulled to the end of the section currently being worked on, the pulling rope 226 is connected to a conductor 114 at the far end of the section being worked on (as shown in FIG. 12). The payout truck 246 contains new conductors 114 to be strung on a wire reel 246. The new conductor 114 is bonded to the equal potential zone 200 by a running ground 230. The new conductor 114 is attached to the pulling rope 226 and pulled back along the path the pulling rope 226 has been strung.

Often, once the pulling rope 226 is strung through the system 100 the pulling rope 226 is not strong enough to pull heavy conductors 114 through the system 100. In such cases, the pulling rope 226 will be attached to a hard line cable that is stronger than the pulling rope 226. The hard line cable will be pulled through the system 100 by the pulling rope 114. The hard line cable will then be attached to a conductor 114 and the conductor 114 will be strung through the system 100 by pulling the hard line cable through the system 100. The conductor 114 is strung in the travelers 244 attached to the end of the insulators 106 mounted to the support structure 104. The stringing method described briefly above will now be described in detail with reference to FIGS. 13-39.

FIGS. 13-39 illustrate one exemplary stringing procedure in accordance with some embodiments of the present invention. A stringing procedure will be described generally and then in detail with reference to FIGS. 13-39.

Generally a stringing procedure in accordance with the invention permits energized conductors to be handled and strung through the system 100. The conductor 114 to be strung will be located between two dead ends 110. If there are no dead ends 110 at each end of the section to be strung, temporary dead ends may be constructed or portable ones (described in more detail below) may be used. Equal potential zones 200 are constructed at each end of the pull (the section line to be strung). Equipment such as pullers, payout equipment, pulling lines 226, hard line 250, and new conductors are bonded to the equal potential zone on which they are located.

According to some embodiments of the invention, the new conductor 114 is not initially strung in the system 100. First a light, relatively easy to handle pulling line 226 (some times referred to as a pull rope) such as a power braid nylon rope 226 is strung through the system 100. In some instances, an isolating and insulating rope 252 may be attached to the front of the pulling rope 226. Next, the pulling rope 226 is attached to the new conductor 114 and the new conductor is strung through the system 100 by winding in the pulling rope 226. The pulling rope 226 may not be directly connected to the conductor 114, but may have a section of insulated rope 252 separating the conductor 114 and the pulling rope 226. Further, one or two swivels may be installed between the new conductor 114 and the pulling rope 226 in order to allow the conductor to twist as needed to relieve the torsional stress on the conductor 114 coming off of the wire reel 246. Whenever connecting two lines together during the stringing procedure, it is preferred to separate the two lines by a section of insulating rope 252, and swivels. The swivels are made of high carbon tool steel and are not made to conduct current, therefore they should be used in conjunction with an insulating rope 252.

It is understood that the insulation ropes function is to be a flexible insulator. The term insulating or isolating rope is not meant to be limiting to rope, but to include any flexible insulator that can bear a mechanical tensile load.

In some cases stringing tension for the new conductor may be too heavy for the pulling rope 226 to pull the conductor through the system 100. In such cases, the pulling rope 226, will be attached to a stronger and heavier line 250 (sometimes referred to as a hard line) such as a steel cable. The hard line 250 is stronger than the pulling rope 226 and is strung through the system 100 by pulling the pull rope 226 through the system 100.

Once the hard line 250 is strung through the system 100, the new conductor 114 to be strung is attached to one end of the hard line 250 via an isolating and insulating rope 252 and pulled through the system 100 by the hard line 250. Once the conductor 114 is strung through the system 100, the conductor 114 is electrically connected to the system 100 to transport power load.

Optionally, in some instances, if a conductor 102 already exists in the system 100 and will be replaced by a new conductor 114, the old conductor 102 can be connected to the new conductor 114 and used to pull in the new conductor 114. An insulating rope 252 is used to separate the old and new conductors to reduce the likelihood of a ground circulating current passing through the pulling socks (Kellum grip) and swivels. A Kellum grip sometimes referred to as a pulling sock. A Kellum grip is a mechanical device which permits two lines such as rope, cables, or conductors to be connected end to end and is configured so that the more tension that is placed on the two lines the grip connects, the tighter the grip holds. The grip is made of woven wire and provides a mechanical connection. Located between the conductors should be a swivel to allow the new conductor coming off of the wire reel to twist, whether it is an old conductor 102, hard line 250, or a pulling rope 226. This general description of stringing procedures in accordance with the invention will now be followed by a detailed description of one stringing procedure in accordance with the invention with reference to the accompanying FIGS 13-39.

In FIG. 13 a schematic of an existing power transfer system layout 100 is shown. Several support structures 104 are set up along a path that the conductors 114 will be strung. Tangent insulators 106 are attached to the support structures 104. The other end of the insulators 106 have travelers 244 mounted on them. The traveler 244 is a pulley-like device that assists in the stringing by allowing a pulling rope, a conductor, or whatever element is being strung to be supported by the support structure 104 via the insulator 106 but while still being able to move through the system 100.

The left hand side of FIG. 13 shows a rope puller 222 bonded to an equal potential zone 200. The rope puller 222 has a reel 228 of rope 226 that can be pulled off the reel 228 and strung through the system 100. Preferably, the pulling rope 226 is non- conductive ; however, if it is conductive (such as steel cable or the like) the pulling rope 226 is bonded via a running ground 230 to the equal potential zone 200 as shown and described with respect to FIG. 11. If the pulling rope 226 is conductive, preferably, a non conductive insulating rope 252 is attached to the front end of the pulling rope 226.

Located between the first support structure 104 on the left and the equal potential zone 200 is a temporary, portable support structure 254. The temporary portable support structure 254 includes a pole 260 mounted to a vehicle 256 which in some embodiments is a bulldozer. Because later in the stringing procedure, this temporary, portable support structure 254 will be configured to be a dead end and thus subject to the mechanical tension of the conductor 114 when strung, insulated guys 258 are attached to the temporary portable support structure 254. The pole 260 and the vehicle 256 are all grounded to the earth, and the guys 258 are also insulated. The portable temporary support structure 256 has a traveler 244 attached to an insulator 116 and is connected to the pole 260 by a crossarm. Optionally a fixed temporary support structure could be built for use according to the invention, and removed when no longer needed.

The right hand side of FIG. 13 shows a hard line puller 260 electrically bonded to the equal potential zone 200. When stringing energized conductors 114, (or a conductor through an energized system which due to induction currents result in an energized conductor), both ends of the pull have equal potential zones 200 grounded to earth. Pulling equipment located on both ends of the pull are bonded to their corresponding equal potential zone 200. As shown in FIG. 13, the hard line puller 260 has a reel 262 of hard line 250 that can be pulled off the reel 262 and strung through the system 100. A second temporary portable support structure 254 and vehicle 256 is placed along the system so that the last support structure 104 is between the temporary portable support structure 254 and the equal potential zone 200.

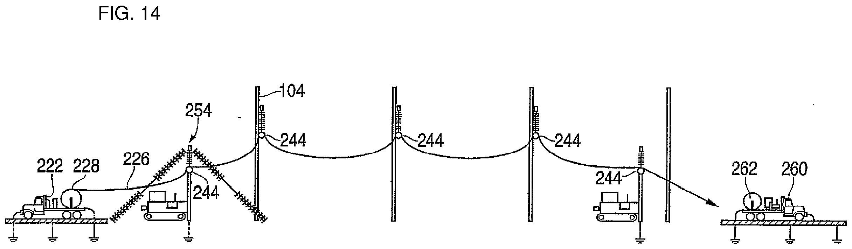

As shown in FIG. 14, the pulling rope 226 is pulled off the rope puller 222, which contains the pulling rope 226 for stringing on a reel 228 mounted on the rope puller 222. The pulling rope 226 is strung from one end of the system 100 to the other toward the hard line puller 260 located on an equal potential zone 200 at the other end of the section of the system 100 to be reconductored.

The pulling rope 226 may be pulled by using conventional methods for stringing lines along support structures 104. For example, the pulling rope 226 may be pulled off the reel 228 on rope puller 222 and strung through the system 100 using vehicles such as, a tracked vehicle, a pick up truck, a helicopter, all terrain vehicles or another suitable type of equipment to pull the pulling rope 226 between support structures 104. In some instances mules, horses, humans or other suitable means may be used to install the pulling rope 226 along the system 100. Sufficient tension is maintained on the pulling rope 226 to keep it off the ground and allow it to clear obstacles. Tension is maintained by braking the reel 228 to keep the pulling rope 226 off of the ground through the length of the pull.

Whenever a support structure 104 is encountered, the pulling rope 226 is pulled up through to the traveler 244 using a rope installed in the traveler 244 (referred to as pee line). The pulling rope 226 will be strung through the traveler 244. The end of the pulling rope 226 is then brought down back to the ground and the vehicle or other means of pulling the pulling rope 226 will continue and travel to the next support structure 104, at which point the procedure will be again repeated where the pulling rope 226 is installed in the traveler 244.

One skilled in the art will appreciate that when helicopters or some other techniques are used to install the pulling rope 226 stringing through the travelers 244 is accomplished according to techniques already established where helicopters are involved. Optionally, travelers 244 may be installed on the support structure 104 prior to or at the same time the stringing of the pulling rope 226 is accomplished, if they are not already installed.

This procedure will be repeated until the pulling rope 226 is strung completely through the section of the system 100 to be reconductored. Once the pulling rope 226 has been strung through the system 100 from one end to the other, a mechanical link is then established along the system 100 along support structures 104.

The pulling rope 226 is initially pulled through the system 100 because it is smaller, lighter, easier to handle. Once the pulling rope 226 has been installed, the pulling rope 226 may be bonded to the equal potential zone 200 and then connected to the hard line 250, which is also bonded to the equal potential zone 200 via the running ground 230. Preferably, the pulling line 226 is not conductive. The conductor 114 will be attached to the pulling rope 226 via the insulated rope 252. Swivels are also installed between the hard line 250 the insulated rope 252 and the pulling rope 226. The swivels are not made to carry current and therefore the insulating rope is required. The pulling rope 226 may be connected to the equal potential zone 200, with a running ground 230 and will then be pulled back allowing the hard line 250 to be strung through the system 100.

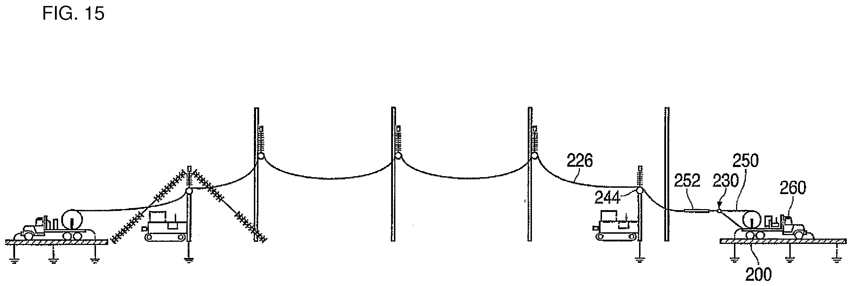

Because the stringing procedure may occur when other conductors are present along the path that the hard line 250 will be strung and those conductors may be transporting a power load, the hard line 250 may gain an electrical potential as the hard line 250 is placed along side the conductors results in induction currents on the hard line 250 being in close proximity of power carrying conductors 102. Therefore, the hard line 250 is electrically bonded to the equal potential zone 200 with a running ground 230 as shown in FIG. 15.

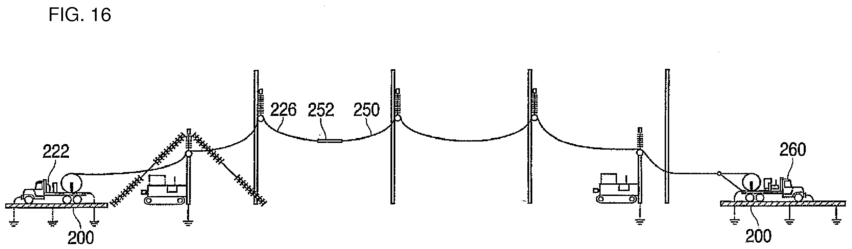

FIG. 16 shows the pulling rope 226 attached to the hard line 250 via an insulating rope 252. The hard line 250 is isolated from the pulling rope 226 because if the lines 226 and 250 were to create an electrical connection between the two equal potential zones 200 a ground circulating current of an unknown magnitude could circulate through the ground, equal potential zones 200, and the lines 226 and 250. To avoid an electrical connection between the two equal potential zones 200, and thus the potential ground circulating current, the pulling rope 226 and the hard line 250 are connected by the insulating rope 252. In some embodiments of the invention the insulated rope 252 is a product sold under the trade name of Amstel blue. Because dirt, humidity, wetness, and other factors that can affect conductivity, the insulating rope 252 is tested prior to its use to ensure that it is not electrically conductive. For example, the insulating rope 252 may be tested using the procedure and apparatus described in U. S. Patent No. 4,266,184.

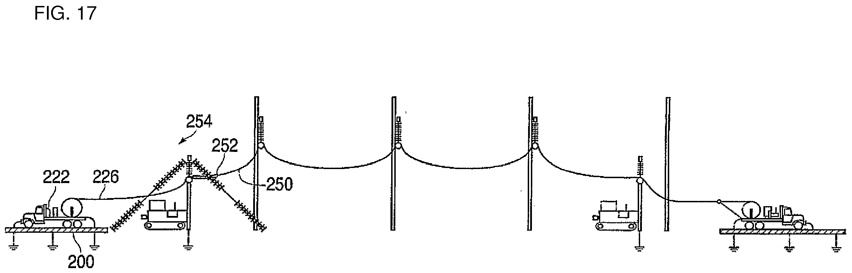

As shown in FIG. 17, the pulling rope 226 is pulled back towards the rope puller truck until the insulating rope 252 reaches the portable temporary support structure 254 as shown in FIG. 17.

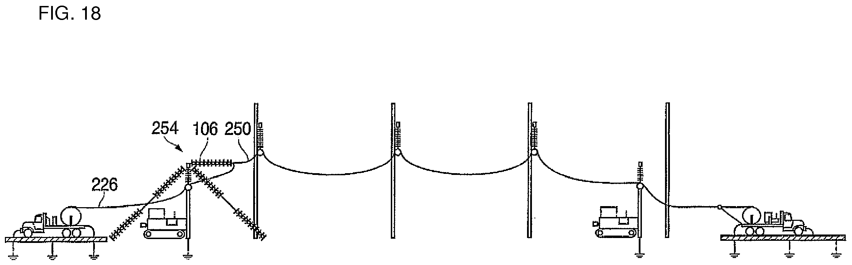

Next, as shown in FIG. 18, the hard line 250 is mechanically attached to the temporary portable support structure 254 by an insulator 106 in a dead end configuration.

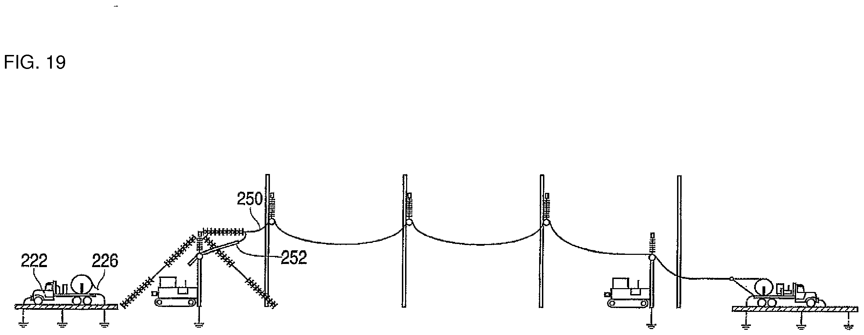

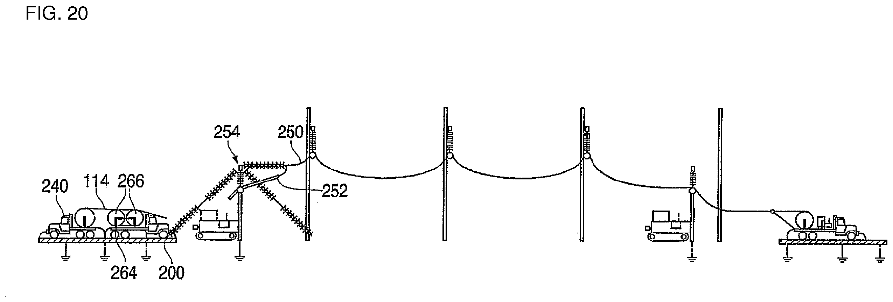

Next, the pulling rope 226 is detached from the insulating rope 252 as shown in FIG. 19. The rope puller 222 may then be moved out of the way and the equipment 240 containing a reel 246 of conductor 114 and a tensioner 266 is positioned onto the equal potential zone 200 and electrically bonded to the equal potential zone 200. Optionally, the conductor 114 can be strung through a bull wheel tensioner 266 which is bonded electrically to the equal potential zone 200 as shown in FIG. 20. The bull wheel tensioner 266 helps keep the conductor 114 at the proper stringing tension to keep the conductor from touching the ground or having enough slack to be blown into contact with other conductors.

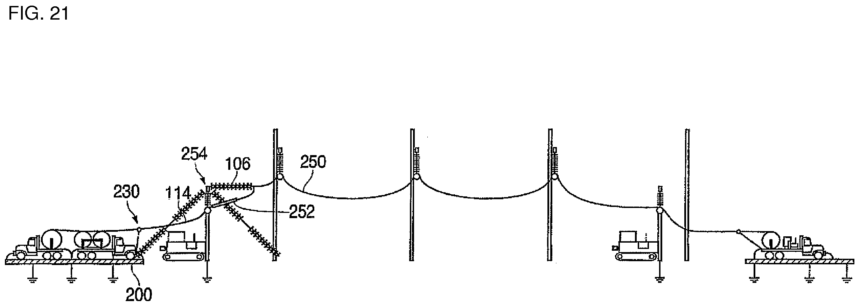

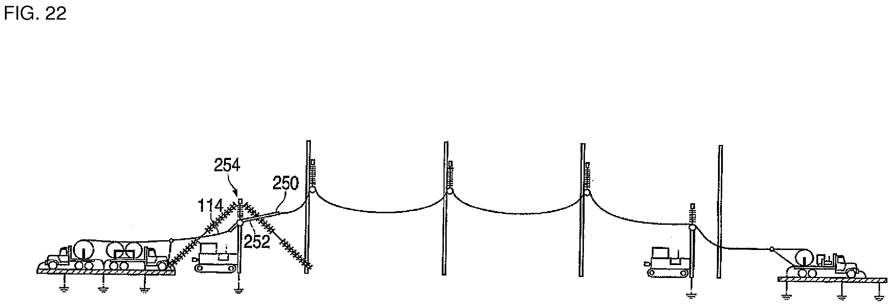

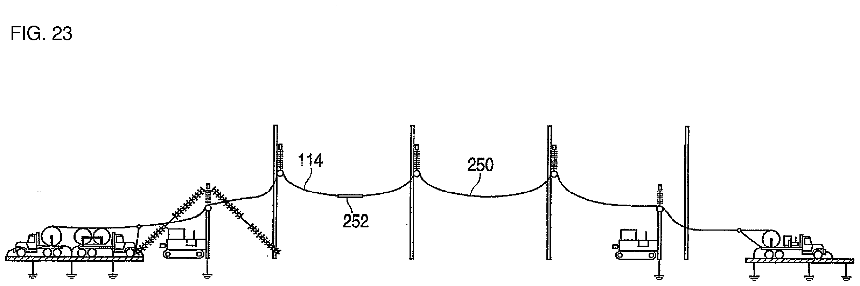

Next, as shown in FIG. 21, the conductor 114 is electrically bonded to the equal potential zone 200 by a running ground 230. The conductor is then attached to the insulating rope 252. Once the conductor 114 is attached to the insulating rope 252, the hard line 250 is disconnected from the insulator 106 on the portable support structure 254 as shown in FIG. 22. With the hard line 250 disconnected from the insulator 106, the hard line 250 and conductor 114 is free to be pulled through the system 100. The hard line 250 is then pulled in and pulls the conductor 114 through the system as shown in FIG. 23.

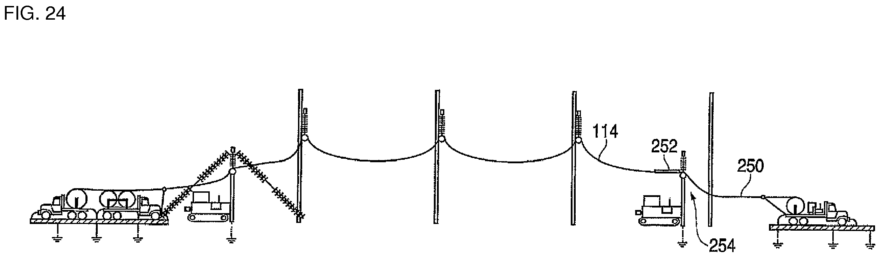

As shown in FIG. 24, the conductor 114 will continue to be strung until the insulating rope 252 reaches the temporary support structure 254.

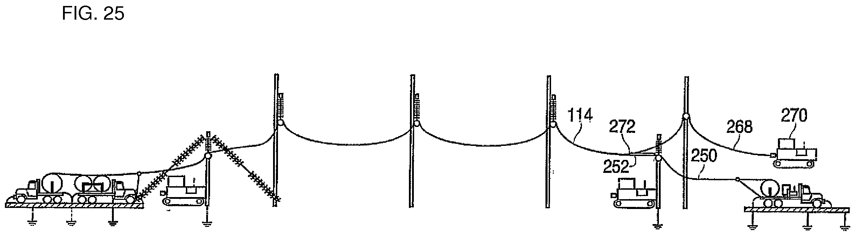

At this point, and as shown in FIG. 25, a second insulating rope 268 (bull rope) is attached to the conductor 114 at approximately the same place where the insulating rope 252 attaches to the conductor 114. A conductor grip 272 may be used to support the conductor tension. The bull rope 268 is also a non-conductive rope, and in some embodiments of the invention is tested to ensure its insulating qualities before using. The bull rope 268 is connected at one end to a pull vehicle 270 (often a bull dozer) and to the conductor 114 at the other end.

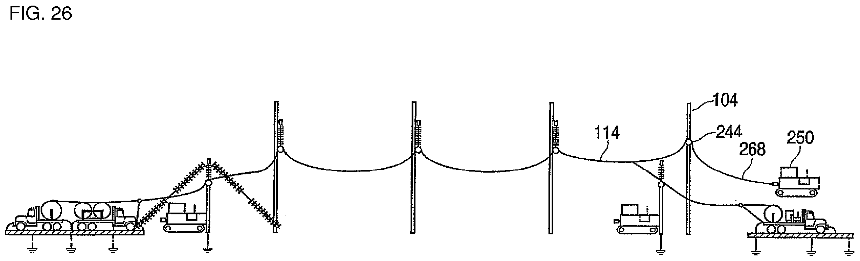

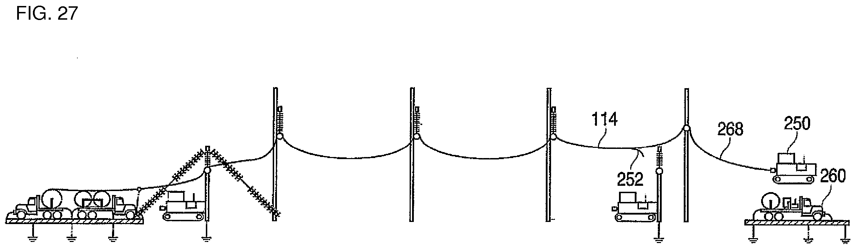

As shown in FIG. 26, the bull rope 268 is run through a traveler 244 on the support structure 104. In some embodiments of the invention, one of the support structures 104 is the last support structure 104 that occurs at a particular section of the power system 100 to be reconductored. That last support structure 104 will eventually be configured as a dead end 110. The bull rope 268 is pulled up by the pulling vehicle 270 until the conductor tension is supported by the bull rope and then the insulating rope 252 and the hard line 250 are disconnected from the new conductor 114 as shown in FIG. 27.

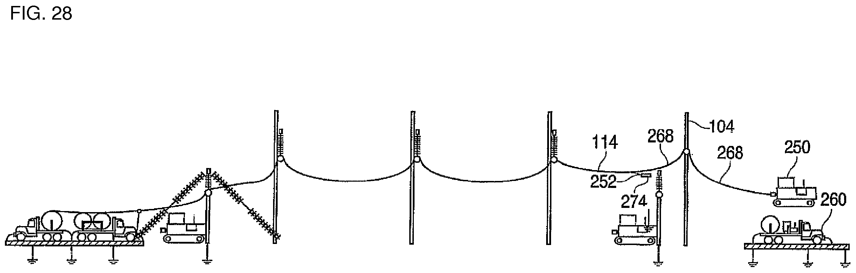

With the new conductor end now free a dead end 274 is installed on the conductor end. The dead end 274 may be a compression dead end or a bolted dead end. In some embodiments of the invention, a dead end 274 is attached to the end of the new conductor as shown in FIG. 28.

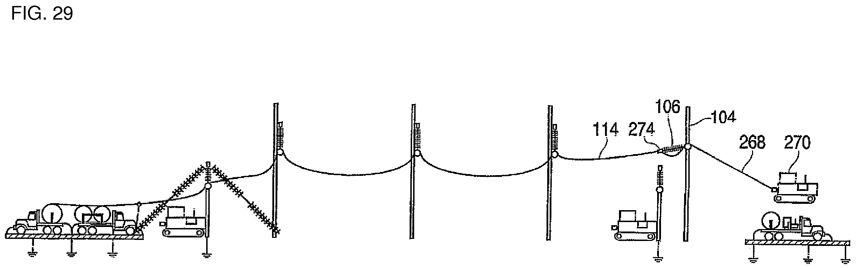

According to some embodiments of the invention, the next step is to attach the conductor 114 to the support structure 104 in a dead end type configuration. As shown in FIG. 29, an insulator 106 is attached to the conductor 114 via the dead end 274. The conductor 114 is mechanically, but not electrically, connected to the support structure 104. As necessary, the pulling vehicle 270 will take up on the bull rope 268 to permit the conductor 114 to be attached to the support structure 104.

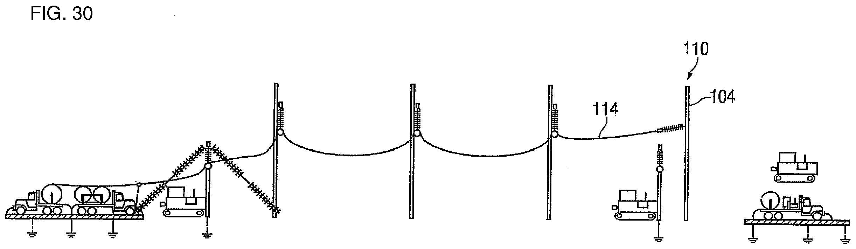

Once the conductor 114 is mechanically attached to the support structure 104, the pulling vehicle 270 and the bull rope 268 are removed from the conductor 114 as shown in FIG. 30. The support structure 104, shown on the far right of FIG. 30, is now attached to the conductor 114 to form a dead end 110.

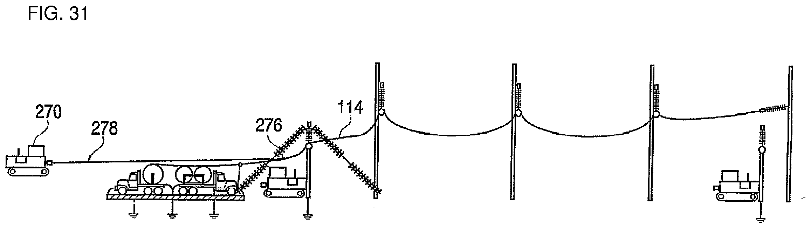

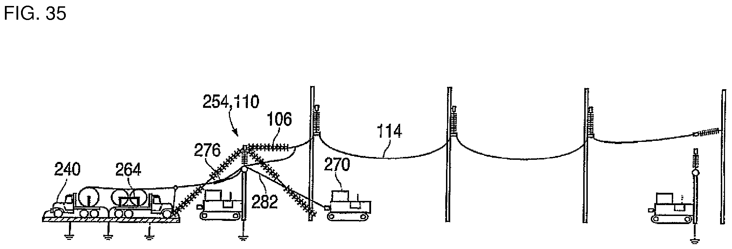

In the embodiments of the invention where the newly strung conductor 114 is connected to a support structure 104 that will end up as a dead end 110, as done on the left hand side of the system 100 shown in FIG. 35, for example, the procedure described above herein and shown in FIGS. 24-30 is preferably used. However, in other embodiments of the invention, such as when the conductor 114 is connected to a portable temporary dead end 254, the following procedure as shown in FIGS. 31-39 is used.

Activity is now directed to the other side of the system 100 as shown on the left side of FIG. 31. A conductor grip 276 is attached to the conductor 114. The conductor grip 276 will connect the conductor 114 to another bull rope 278 which, in some embodiments of the invention, is a insulated non-conductive rope that is tested as previously discussed, before being used and is connected to a sagging vehicle 270. (In this case a bulldozer). Sagging vehicle 270 will then take up the new conductor 114 tension.

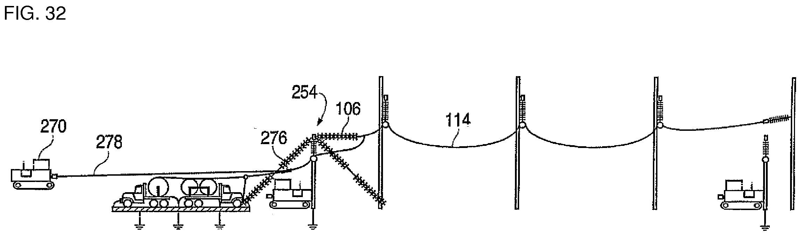

With the sagging vehicle 270 applying tension to the conductor 114, the conductor 114 will then be attached to the insulator 106 installed on the temporary portable support structure 254 at the final design tension as shown in FIG. 32. Alternatively the conductor may be brought to a final tension using a hand operated chain hoist. Other tensioning devices may also be used as a winch, come-a-long or other suitable tensioning device. A tension measuring device is used to ensure the conductor 114 is brought up to the proper design tension.

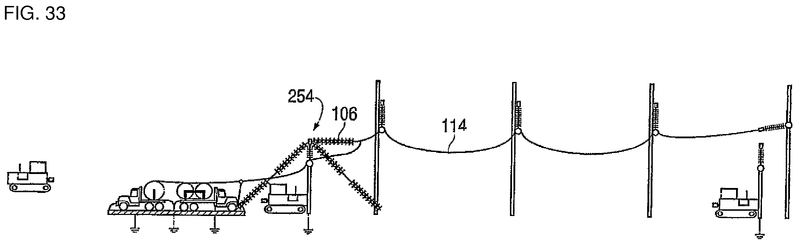

The bull rope 278 is then disconnected from the conductor 114 as shown in FIG. 33. In order to remove the bull rope 278, tension on the bull rope 278 is relieved by backing up the sagging vehicle 270.

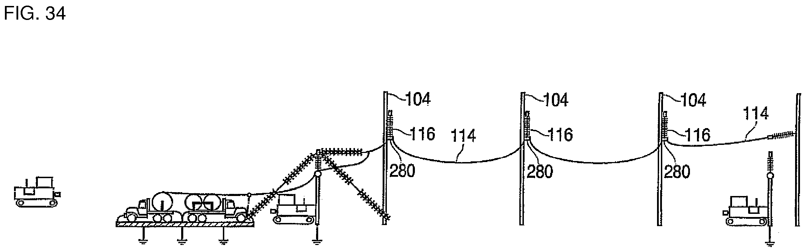

According to some embodiments of the invention, and as shown in FIG. 34, the conductor 114 is released from the travelers 244 and the travelers 244 are removed from the insulators 116. This may be accomplished using hot sticks or other suitable equipment. Optionally, the conductor 114 is fitted with armor rods 280, which act as a strain relief for the conductor 114. The conductor 114 is clipped (attached) into the tangent insulators 116 using a conductor clamp.

As shown in FIG. 35, the sagging vehicle 270 is connected to the conductor 114 by an insulated bull rope 282. The bull rope 282 attaches to the conductor 114 with a conductor grip 276. The sagging vehicle applies tension to the bull rope 282 which, in turns, applies tension to the conductor 114 thus relieving tension on the conductor 114 between the bull wheel tensioner 264 and the temporary dead end structure 254 as shown in FIG. 35.

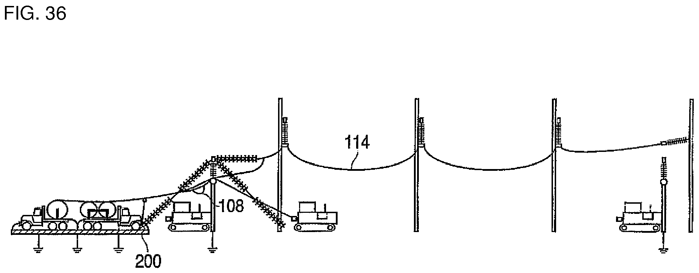

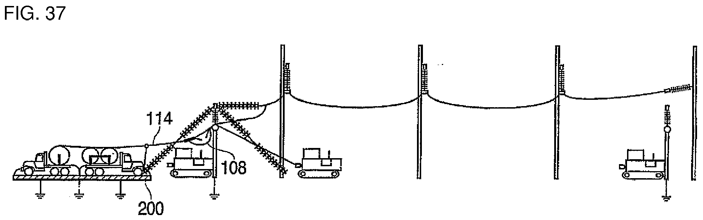

As shown in FIG. 36 both ends of a conductive jumper 108 are installed onto the conductor 114 to provide an electrical path from the newly strung section of the conductor 114 to the section of the conductor 114 that is bonded to the equal potential zone 200 once the conductor 114 is cut. The next step is to cut the conductor 114 at the temporary dead end 254 as shown in FIG. 37.

The jumper 108 provides an electrical path between the two separated ends of the conductor 114 as shown in FIG. 37. Because the electrical path between the two ends of the conductor 114 extends to the equal potential zone 200, the conductor 114 is at the same potential as workers and equipment on the equal potential zone 200.

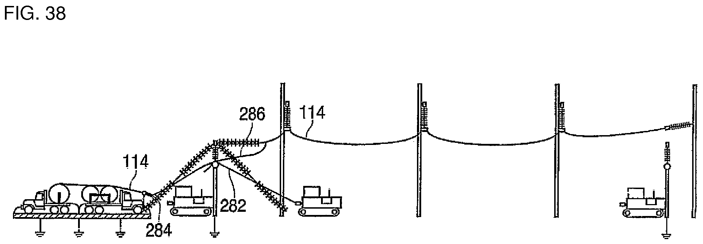

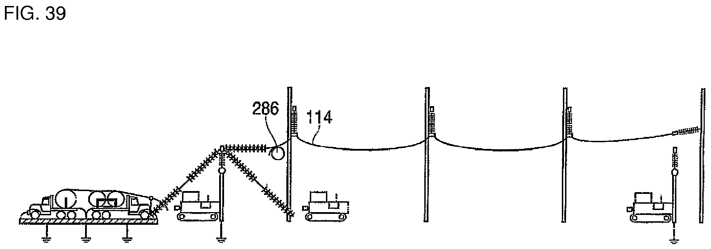

In the next operation, the jumper 108 is removed using hot sticks or other suitable equipment. As shown in FIG. 38, the tail section 284 of the conductor 114 is lowered to the ground. At this point the section of the conductor 114 strung in the system 100 is not grounded nor is it any longer connected to the equal potential zone 200 or necessarily have the same potential as the equal potential zone 200. It may contain a voltage due to induction currents caused by the conductor's 114 close proximity of other conductors in the system 100 carrying a power load. The end 286 of conductor 114 strung in the system 100 can be coiled using insulated equipment and attached to the temporary portable support structure 254 as shown in FIG. 39.

When the length of the new conductor 114 to be installed is longer than the length of conductor that is contained on the wire reel 246 another wire reel 246 is used. The two ends of the new conductor 286 need to be joined so that the stringing operation can continue. The two conductor ends are joined using pulling socks (Kellum grips) and swivels separated by an insulating rope 252. After all the new conductor is installed in the section to be reconductored 100 it needs to be spliced together as described below.

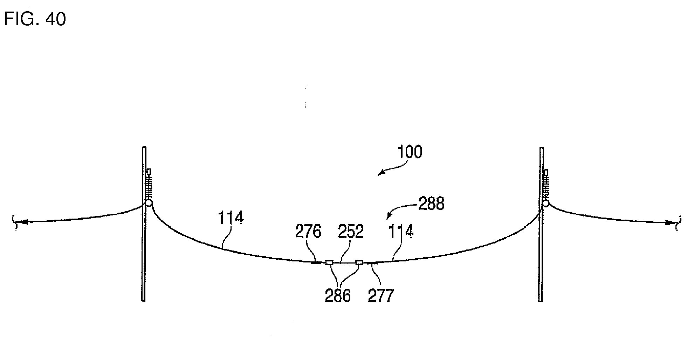

Turning now to another aspect of the present invention, figures 40-46 illustrate a method and related apparatus for connecting (splicing) the new conductors 114 together.

For various reasons, it may be desirable to electrically and mechanically connect two conductors together. The following is one example of splicing two conductors according to one optional embodiment of the invention.

FIG. 40 shows two ends of conductors 114 separated by insulating rope 252.
The insulating rope 252 is connected to the conductors 114 by Kellum grips 277. Kellum grips 277 are sometimes referred to as pulling socks 277. A first pulling sock 277 connects one end of the insulating rope 252, to a conductor 114 and a second pulling sock 277 connects the other end of insulating rope 252 to the other conductor 114, this type of connection is referred to as a double or back to back sock connection 288.

When tension is applied to either the conductor 114 or insulating rope 252 pulling sock 277 tightens around the ends of both conductors 114. Thus, the more tension applied to the conductor 114, the tighter the pulling sock 277 grips the ends of conductor 114. Swivels are used to join the pulling socks 277 to the insulating rope 277 in a double or back to back sock connection 288. While some embodiments of the present invention use pulling socks 277 and swivels to connect conductors 114 to the insulating rope 252, any suitable connecting type device may be used in accordance with the present invention.

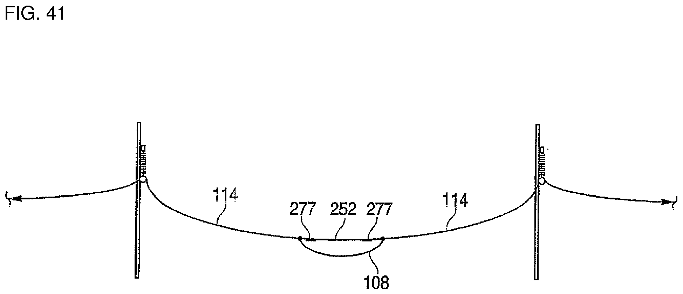

Because insulating rope 252 and the pulling socks 277 do not provide an electrical connection between the two conductors 114, but only a mechanical connection, a conductive jumper 108 is installed thus providing an electrical connection, between the two conductors 114 as illustrated in FIG. 41. The jumper 108 is usually installed with hot sticks or can be installed according to any suitable means known in the art. The jumpers 108 will electrically connect the one conductor 114 to the other conductor 114 and bypass the insulating rope 252 swivels and the pulling socks 277.

If splicing out a double sock connection 288 with the conductors 114 in close proximity to energized conductors 114, workers and any equipment used should be located on and the equipment bonded to the equal potential zone 200.

In order to remove the pulling socks 277, swivels and the insulating rope 252, a permanent splice is installed on the ends 286 of the conductors 114. The permanent splice provides a mechanical and electrical connection between the conductors 114. The splice can be a compression splice, automatic splice or a preformed splice.

In accordance with an embodiment of the invention, the jumper 108, the insulating rope 252, the swivels and pulling socks 277 are replaced according to a splicing method described below. Some embodiments of the present invention may use a splicing truck 290. However, a splicing truck 290 is an optional convenience, not necessary to practice the invention. The splicing truck 290 has the advantage that it can support the conductor tension and provides hydraulic power for compressing the splice.

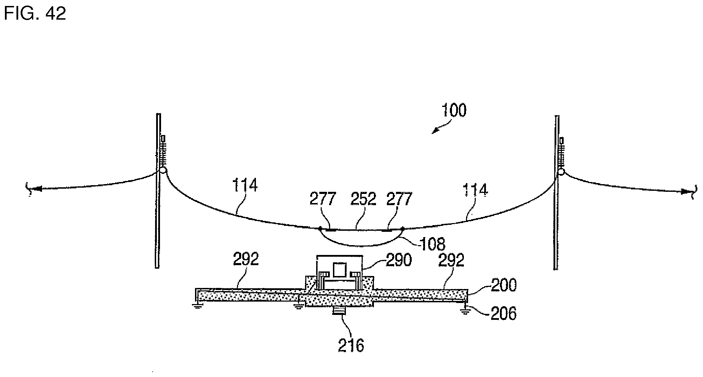

In order to install the splice between the two conductors 114 while the two conductors 114 are in close proximity to energized conductors, an equal potential zone 200 is constructed below the point conductors 114 are to be spliced. In embodiments of the invention where a splicing truck 290 is used, the splicing truck 290 will be parked on the equal potential zone 200 below the jumper 108 and insulating rope 252, as shown in FIG. 42, and electrically bonded to the equal potential zone 200.

Optionally, a ground wire 292 may be laid on the equal potential zone 200 and bonded to the equal potential zone 200 and to ground. The splicing truck may be electrically bonded to the ground wire 292. The conductor 114 and the insulating rope 252, pulling socks 277, and jumper 108 may be lowered by pulling the conductors 114 down to the equal potential zone 200 with the splicing truck 290. If a ground wire 292 is used, the conductors 114 are electrically bonded to the ground wire 292. The ground wire 292 may be useful in cases where the conductors 114 may have large currents and could exceed the capacity of smaller conductors within the equal potential zone 200. Once the conductors 114 have been pulled down to the equal potential zone 200, the conductors 114 on both sides of the double sock connection 288 are both electrically bonded to the equal potential zone 200 and the ground wire 292. When the conductor tension is assumed and the jumper 108, pulling socks 277, and the insulated rope 252 become slack, they may be removed. The two ends of the conductor 114 are then mechanically and electrically spliced to each other. The conductors 114 may be spliced together using a aluminum splicing sleeve that is hydraulically pressed onto the conductors 114 by the splicing truck 290. Optionally, the conductors 114 may be connected by using any suitable means for providing a electrical and mechanical connection.

Because both conductors 114 are bonded to the equal potential zone 200, the two conductors 114 may be worked on by workers on the equal potential zone 200 without a danger of a difference in potential between the conductors 114 and the workers on the equal potential zone 200. In embodiments where a splicing truck 290 is not used, similar procedures as described may be used. For example, the equal potential zone 200 and the conductors 114, the insulated rope 252, the pulling socks 277 and jumper 108 are lowered and bonded to the equal potential zone 200 where they are worked on by workers without the benefit of a splicing truck 290.

In some embodiments of the invention, the conductors 114, pulling socks 277 and jumper 108 are not lowered down to the equal potential zone 200, but rather workers are raised to the level of the conductors 114 in a bucket truck or some other apparatus. Conductive jumpers are used to electrically bond the conductors 114 on either side of the double sock connection 288. Once the bonding is accomplished, workers and/or equipment are raised to the level of the conductors 114 to splice the conductors 114 together using any suitable means for providing electrical and mechanical connections for high voltage and tensioned power lines.

In some embodiments of the invention, the equal potential zone 200 used in a splicing procedure in accordance with the invention will use a mat 202 about 100 feet long and about 12 feet wide (this size need not be achieved by one mat 202 but may be several mats 202 bonded together). All the mats 202 will be bonded together and tied to ground rods 206. A ground wire 292 will be connected between the ground rods 206 as shown in FIG. 42. The splicing truck 290 will be bonded to ground rod 206. A barricade fence 218,220 (see FIG. 8) will be installed around the perimeter of the equal potential zone 200 and an insulating bridge access 216 will be provided to get on and off the equal potential zone 200. All the barricade fence posts will be bonded electrically to the equal potential zone 200.

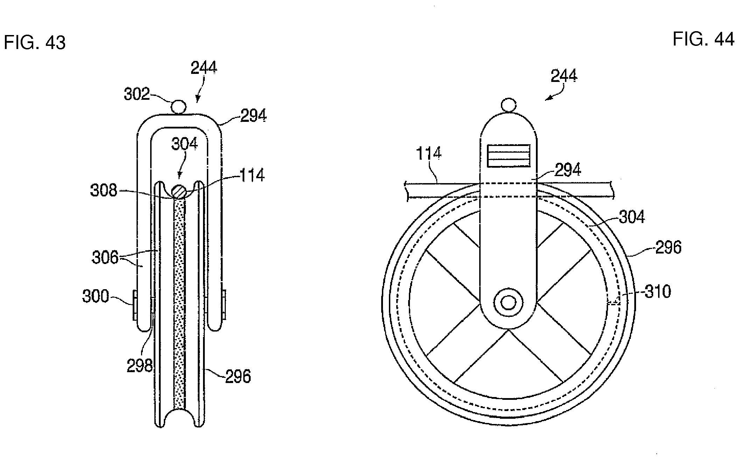

Turning now to the travelers 244 that have been referred to herein, the following is a detailed explanation with reference to FIGS. 43-45 of travelers 244 in accordance with the invention according to an exemplary embodiment of the invention.

As shown in FIGS. 43-45, the traveler 244 is a pulley-like device that facilitates either the conductor, pulling rope, hard line, or other stringing line to be strung along the system 100. A traveler 244 may be attached to support structure 104 via an insulator 106 or may be attached directly to the support structure 104. A conductor 114 or any other line used in the stringing process is placed in the traveler 244 and pulled through the system 100.
The travelers 244 are then removed from the conductor 114 and the conductor 114 is attached directly to the insulators 106 or armor rods 280 (See FIG. 34) are installed on the conductor 114 which is then attached to the insulators 106. The travelers 244 are removed from the insulators 106.

As shown in FIG. 43 the traveler 144 includes a frame 294. The frame 294 is generally U shaped as shown in FIG. 43. The traveler 244 also includes a wheel section 296 which attaches to the frame 294 via an axle 298. The pulling rope, hard line, or conductor sits in the groove between the wheel section 296 and the frame 294. The axle 298 is retained within the frame 294 by a hub 300.

At the top of the frame 294 is located an attaching apparatus 302 which is used to attach the traveler 244 to an insulator 106. The attaching apparatus 302 may be able to swivel to allow the traveler 244 to swivel when it is attached to an insulator 106.

As shown in FIG. 43, the wheel 296 has a U shaped profile 304. The U shaped profile 304 assists in allowing the conductor or whatever is being strung through the traveler 244 to be properly aligned around the wheel 296. In some embodiments of the invention, the conductor or whatever line is being strung through the traveler 244 is strung between the frame 294 and the wheel section 296. The weight of the conductor or whatever is being strung through the traveler 244 is borne by the wheel section 296. As the cable or conductor is pulled through the system 100, the wheel section 296 will rotate thus allowing the line being strung to be easily pulled along the system 100.

Often conductors that are strung in power transfer systems 100 are made of metal that may be exposed and not protected by any sort of coating. This exposed metal may potentially be damaged if placed in contact with part of a metal traveler 244. In order to protect the conductor made of exposed metal wire and configured to form a cable, the traveler 244 is given a neoprene coating 306 on the wheel section 296. The neoprene coating 306 aids in protecting the conductor from rubbing and becoming frayed or otherwise damaged by the traveler 244.

In addition to the wheel 296 moving around the axle 298, some embodiments of the invention also include bearings mounted within the wheel 296 for facilitating movement of the wheel 296 around the axle 298.

As shown in FIG. 43, some embodiments of the invention include a thin braided flat copper conductor 308 wrapped around the insulating wheel liner 306 and bonded to the wheel 296. The copper conductor 308 is wrapped around the wheel 296 outside the neoprene coating 306. An electrical pathway is provided through the neoprene coating 306 to the metal wheel 296 and frame 294, so as to prevent the conductor and traveler 244 from arcing and burning when subject to a high potential difference between the traveler 244 and conductor. The neoprene coating 306 is used to protect the conductor from wear and generally is not intended to electrically insulate the conductor from the traveler 244.

The braided flat copper conductor 308 located in the smallest diameter section of the wheel section 296 and the traveler 244 at the bottom of the U shaped profile 304 as shown in FIG. 100.

A hole 310 is provided in the wheel section 296, where a screw provides an electrical path between the copper conductor 308 and the wheel section 296, thus allowing an equal potential to exist between the copper conductor 308 and the wheel section 124. Conductive grease is used within the bearings to facilitate an equal potential between the wheel section 296, the bearings, axle 298, and the frame 294. Keeping the entire traveler 244 to a same potential makes the traveler 244 suitable for use in energized reconductoring. The traveler 244 will not be subject to differences in potential across different parts of the traveler 244, because the traveler 244 is modified to ensure all parts of it, the traveler 244 will be at the same potential and permit a conductor 102 in an energized state, to be strung through in the traveler 244 without creating any arcing, burning or other problems associated with a difference in potential between two objects in electrical contact with each other.

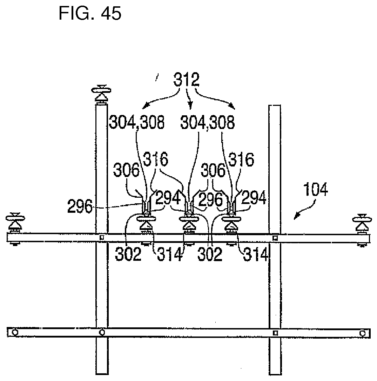

Another embodiment of the invention includes travelers 312 as shown in FIG. 45. The travelers 312 shown in FIG. 45 are utilized when helicopters are used in a stringing operation. The travelers 312 are mounted wheel side up and are mounted to pin insulators 314. The pin insulators 314 are mounted to the support structure 104. The helicopter strung travelers 312 are similar to the travelers 244 previously described herein and shown in FIGS. 43-44 in that the travelers 312 have a wheel 296 mounted in a frame 294 by an axle 298 (see FIGS. 43-44). Attached to the frame 294 are line guides 316.

The line guides 316 are angled inward to help a line being strung by a helicopter to center on the wheel 296. It is the wheel 296 that supports the line being strung and the rolling action of the wheel 296 aids in allowing the line to move through the system 100.

According to some embodiments of the invention, the travelers 312 have a U-shaped profile 304 in the wheel 296 similar to the U-shaped profile 304 of the travelers 244. Conductive grease is used in the bearings to maintain an equal potential between the axle 298, wheel 296 and the frame 294, similar to the travelers 244.

Optionally, the travelers 312 are coated with a neoprene coating 306 and may be equipped with a braided flat copper conductor 308 located in the U-shaped profile 304 of the wheel 296. An electrical pathway is provided through the neoprene coating via a screw contacting the copper conductor 308 similar to the traveler 244 of FIGS. 43-44 or via any other suitable means.

The travelers 312 include an attaching apparatus 302 mounted to the frame 294. The attaching apparatus 302 provides structure to mount via a bolt and nut system or any other suitable system to mount the traveler 312 to the insulators 314.

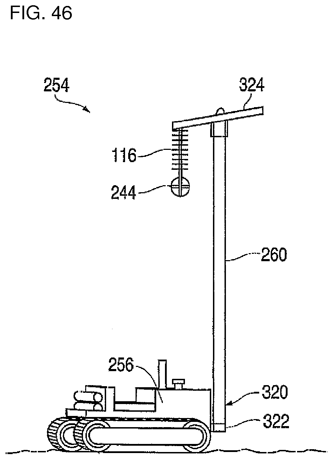

The temporary portable support structure 254 used in some embodiments of the invention will now be explained in detail with reference to FIG. 46. The temporary portable support structure 254 includes a vehicle 256, and in some embodiments is a tracked vehicle such as a bulldozer. In other embodiments the vehicle 256 may be a wheeled vehicle. A pole 260 or some other upright structure at its base 320 is attached to the frame 322. The pole 260 may be welded, bolted or otherwise attached in accordance with the invention. The upright structure may be made of wood, metal,, fiberglass, of other suitable materials.

A crossarm 324 is attached to the pole as shown in FIG. 46. The crossarm 324 may be used to support an insulator 116 and traveler 244 as shown. Other apparatus may also be supported by the crossarm 324 such as an air break switch 140 for example. In some embodiments of the invention, the vehicle 256 and pole 260 are grounded to the earth by ground rods 206 (see FIG. 8) driven into the earth and conductive jumpers bond the vehicle 256 and/or pole 260 to the ground rods. In other embodiments of the invention, simply parking the vehicle 256 on the earth serves as a sufficient ground.

## Claims

1. A method of anchoring a vehicle (240) on an equal potential zone (200) comprising: placing a first vehicle on the equal potential zone; electrically bonding the first vehicle to the equal potential zone; **characterized by** locating an anchor (238) off of the equal potential zone (200) and spaced from the equal potential zone; mechanically connecting the anchor to the first vehicle; and electrically insulating the anchor from the first vehicle.

2. The method of claim 1, wherein the first vehicle is one of a stringing and payout truck (240).

3. The method of claim 1, wherein the anchor is at least one of a second vehicle and a buried object.

4. The method of claim 3, wherein the second vehicle is a bulldozer.

5. The method of claim 1, wherein the insulating step comprises connecting the first and second vehicle with a flexible insulator.

6. The method of claim 5, further comprising testing the insulated line for conductivity before connecting the first and second vehicle.

## Patentansprüche

1. Verfahren zum Verankern eines Fahrzeuges (240) auf einer Äquipotentialzone (200) aufweisend: Platzieren eines ersten Fahrzeugs auf der Äquipotentialzone; elektrisches Verbinden des ersten Fahrzeugs mit der Äquipotentialzone; **gekennzeichnet durch**
Anordnen eines Ankers (238) außerhalb der Äquipotentialzone (200) und beabstandet von der Äquipotentialzone; mechanisches Verbinden des Ankers mit dem ersten Fahrzeug; und elektrisches Isolieren des Ankers von dem ersten Fahrzeug.

2. Verfahren nach Anspruch 1, wobei das erste Fahrzeug ein Lkw zum Spannen oder ein Lkw zum Ausgeben (englisch: payout truck) (240) ist.

3. Verfahren nach Anspruch 1, wobei der Anker ein zweites Fahrzeug und/oder ein vergrabenes Objekt ist.

4. Verfahren nach Anspruch 3, wobei das zweite Fahrzeug ein Bulldozer ist.

5. Verfahren nach Anspruch 1, wobei der Schritt des Isolierens ein Verbinden des ersten und zweiten Fahrzeuges mit einem flexiblen Isolator aufweist.

6. Verfahren nach Anspruch 5, wobei es ferner ein Testen der Isolationsleitung auf Leitfähigkeit vor Verbinden des ersten und zweiten Fahrzeugs umfasst.

## Revendications

1. Procédé d'ancrage d'un véhicule (240) sur une zone de même potentiel (200) comprenant : placer un premier véhicule sur la zone de même potentiel; relier électriquement le premier véhicule à la zone de même potentiel; **caractérisé par** localiser un ancrage (238) hors de la zone de même potentiel et de manière espacée de la zone de même potentiel; relier mécaniquement l'ancrage au premier véhicule; et isoler électriquement l'ancrage du premier véhicule.

2. Procédé selon la revendication 1, dans lequel le premier véhicule est l'un des camions poids-lourds avec équipement à déroulage (240).

3. Procédé selon la revendication 1, dans lequel l'ancrage est au moins l'un d'un second véhicule et d'un objet enterré.

4. Procédé selon la revendication 3, dans lequel le second véhicule est un bulldozer.

5. Procédé selon la revendication 1, dans lequel l'étape d'isolation comprend la connexion des premier et second véhicules avec un isolant flexible.

6. Procédé selon la revendication 5, comprenant en outre l'essai de la ligne isolée avant la connexion des premier et second véhicules.
